# EUROPÄISCHE PATENTSCHRIFT

(11) **EP 2 386 814 B1**
(45) Veröffentlichungstag und Bekanntmachung des Hinweises auf die Patenterteilung: **25.10.2017**
(21) Anmeldenummer: 11003608.4
(22) Anmeldetag: 03.05.2011
(51) Int. Cl.: F25J 3/02

(54) **Stickstoff-Abtrennung aus Erdgas**
Separation of nitrogen from natural gas
Séparation d'azote à partir de gaz naturel

(30) Priorität: 12.05.2010 DE 102010020282
(43) Veröffentlichungstag der Anmeldung: 16.11.2011
(73) Patentinhaber: Linde AG, 80331 München (DE)
(72) Erfinder: Bauer, Heinz, Dr., 82067 Ebenhausen (DE); Gwinner, Martin, 82398 Polling (DE); Garthe, Daniel, Dr., 94330 Aiterhofen (DE)
(74) Vertreter: Richmond, Sarah

(56) Entgegenhaltungen:
- DE-A1- 3 811 132
- DE-A1- 3 919 627
- US-A1- 2010 108 487
- BAUER H C ET AL: "CO2 tolerant N2 rejection from natural gas", 2011 AICHE SPRING MEETING & 7TH GLOBAL CONGRESS ON PROCESS SAFETY ; HYATT REGENCY CHICAGO, CHICAGO, IL, MARCH 13 - 17, 2011, NEW YORK : AMERICAN INSTITUTE OF CHEMICAL ENGINEERS, US, 1. März 2011 (2011-03-01), Seite 8pp, XP009163229, ISBN: 978-0-8169-1067-0

## Beschreibung

Die Erfindung betrifft ein Verfahren zum Zerlegen einer Kohlenwasserstoff-reichen, Stickstoff-enthaltenden Einsatzfraktion, vorzugsweise von Erdgas,
a) wobei die Einsatzfraktion zumindest teilweise verflüssigt und rektifikatorisch in eine Stickstoff-angereicherte Fraktion und eine Kohlenwasserstoff-reiche, Stickstoff-abgereicherte Fraktion aufgetrennt wird und
b) wobei im oberen Bereich der Rektifikation ein Stickstoff-angereicherter Strom abgezogen, abgekühlt und zumindest teilweise der Rektifikation als Rücklauf aufgegeben wird und/oder
c) die Stickstoff-angereicherte Fraktion abgekühlt und partiell kondensiert wird, zumindest teilweise der Rektifikation als Rücklauf aufgegeben wird und der Reststrom der Stickstoff-angereicherten Fraktion einem Doppelkolonnenprozess unterworfen wird.

Gattungsgemäße Verfahren zum Verflüssigen von Erdgas, bei denen eine kryogene Stickstoffabtrennung realisiert wird bzw. die eine sog. Nitrogen Rejection Unit (NRU) aufweisen, erfordern, dass im Erdgas enthaltene Komponenten mit hoher Schmelztemperatur, wie bspw. Kohlendioxid, bei der Verfahrenskonzeption berücksichtigt werden, um ein unerwünschtes Ausfrieren derartiger Komponenten in den kalten Prozessabschnitten wirkungsvoll zu verhindern.

Da die maximale Löslichkeit von Kohlendioxid im Wesentlichen von der Temperatur des Lösungsmittels - bspw. flüssige Kohlenwasserstoffe - abhängig ist, sind gattungsgemäße Verfahren, die bei erhöhtem Druck ablaufen, Kohlendioxid-toleranter als solche, die bei niedrigem Druck und somit niedrigeren Fluidtemperaturen betrieben werden. Unter dem Begriff "erhöhtem Druck" seien hierbei Drücke von mehr als 20 bar zu verstehen.

Bei einem typischen Doppelkolonnenverfahren, wie es bspw. aus der US 4,415,345 bekannt ist, erzwingt das niedrige Temperaturprofil in der Niederdruckkolonne eine Kohlendioxid-Abreicherung im Einsatzgas auf wenige ppm. Um dies zu erreichen, ist eine aufwändige Vorreinigung, bspw. mittels einer Aminwäsche, vorzusehen.

Wird der Druck der Kohlendioxid-haltigen Verfahrensströme hingegen hoch gehalten, ermöglichen die daraus resultierenden höheren Temperaturen Kohlendioxid-Konzentrationen im niedrigen Prozentbereich ohne Gefahr der Kohlendioxid-Feststoffbildung. Dieses Konzept wird beim sog. Einkolonnenverfahren erfolgreich angewendet. Hierbei wird das stickstoffhaltige Erdgas bei einem Druck von bis zu 30 bar in eine Stickstoff-reiche Kopffraktion und eine Kohlenwasserstoff-reiche Sumpffraktion zerlegt.

In der US 4,662,919 wird ein Verfahren mit einer unter erhöhtem Druck betriebenen N₂/CH₄-Trennkolonne beschrieben. Die Kopftemperatur einer Kolonne dieser Art beträgt bei 25 bar ca. -150 °C. Als Kältemittel wird Methan in hoher Reinheit - in Bezug auf Ethan und höhere Kohlenwasserstoffe, Kohlendioxid und Wasser - verwendet, das bei einem Druck von ca. 2 bara verdampft wird. Bei einem derartigen Verfahren mit geschlossenem Kühlkreislauf ist die Verfügbarkeit des Kältemittels eingeschränkt. Übliches Pipelinegas muss aufwändig gereinigt werden. Darüber hinaus ist die Lagerung des teuer hergestellten Kältemittels bei Anlagenstillstand in der Regel nur als Flüssigkeit, d. h. LNG, wirtschaftlich möglich.

Aus der US 5,257,505 ist ein Verfahren mit einer ähnlichen Rektifikationskolonne bekannt. Hierbei kommt allerdings ein offener Kühlkreislauf zum Einsatz, bei dem ein Teil des Sumpfproduktes der Rektifikationskolonne nach Entspannung auf ca. 2 bar zur Kopfkühlung herangezogen wird. Dadurch entfallen die aufwändige Bereitstellung sowie die Lagerung des Kältemittels. Aufgrund der niedrigeren Siedetemperatur des zur Kühlung verwendeten Sumpfproduktes darf das Einsatzgas nun in diesem Falle jedoch mehr einige Prozent, sondern nur noch einige Hundert ppm Kohlendioxid enthalten, um ein Ausfrieren des Kohlendioxids im Sumpfprodukt bei der Verdampfung im Kopfkondensator zu vermeiden. Die gegenüber dem vorbeschriebenen, geschlossenen Kreislauf einfachere Kältemittelversorgung dieser Verfahrensweise reduziert somit die Kohlendioxid-Toleranz um ca. den Faktor 100. In vielen Fällen ist nun eine Aminwäsche zur Vorbehandlung erforderlich, um den Kohlendioxid-Gehalt auf für das nachfolgende Verflüssigungsverfahren akzeptable Werte abzusenken

In der US 2010/0108487A wird ein Verfahren zur rektifikatorischen Trennung einer Kohlenwasserstoff- / Stickstoff-enthaltenden Einsatzfraktion beschrieben, das eine Trennwandkolonne und eine Wärmepumpe einsetzt. Die Stickstoffabtrennung aus Erdgas mittels eines Doppelkolonnen-Verfahrens, wie es bspw. in der US 4,415,345 beschrieben ist, erfordert in der Regel ca. 30 Vol.% Stickstoff im Einsatzgas, um die üblichen Reinheiten für die Produktströme Stickstoff (< 1 Vol.-% Methan) und Erdgas (< 5 Vol.-% Stickstoff) erreichen zu können. Falls dieser Mindeststickstoffgehalt zeitweise oder immer unterschritten wird, wird u. a. eine Anreicherung der Stickstoff-Konzentration durch Abtrennung einer Stickstoff-armen, Kohlenwasserstoff-reichen Fraktion in einer Vortrenn- bzw. Anreicherungskolonne eingesetzt. Eine derartige Verfahrensweise ist bspw. in der US 4,664,686 beschrieben. Die auf wenigstens 30 Vol.-% Stickstoff angereicherte Gasphase der Anreicherungskolonne wird anschließend in einer konventionellen NRU mit Doppelkolonne in eine Stickstoff-reiche Fraktion sowie zwei Teilströme der Stickstoff-armen, Kohlenwasserstoff-reichen Fraktion zerlegt. Hierbei wird ein Teilstrom des Kohlendioxid-haltigen Sumpfproduktes der Doppelkolonne zur Kühlung des Kopfkondensators verwendet. Die Verwendung von offenen oder geschlossenen Kreisläufen zur Unterstützung der Trennleistung ist bei Doppelkolonnenverfahren nicht gebräuchlich.

Bei einem derartigen Doppelkolonnenverfahren mit Anreicherungskolonne erzwingt das niedrige Temperaturprofil - dies bedeutet drohender Kohlendioxid-Feststoffausfall - im Niederdruckteil der Doppelkolonne eine Kohlendioxid-Abreicherung im Einsatzgas auf weniger als 50 ppm, die durch eine aufwändige Vorreinigung, bspw. eine Aminwäsche, eingestellt werden muss. Die durch die Anreicherungskolonne bzgl. ihres Stickstoff-Gehalts erhöhte Gasfraktion soll durch geeignete Verfahrensführung soweit von Kohlendioxid befreit werden, dass auch Einsatzgase mit erhöhtem Kohlendioxid-Gehalt von 1 bis 3 Vol.-% ohne Aminwäsche verarbeitet werden können, ohne Feststoffprobleme in Bereich der Doppelkolonne zu verursachen.

Aufgabe der vorliegenden Erfindung ist es, ein gattungsgemäßes Verfahren zum Zerlegen einer Kohlenwasserstoff-reichen, Stickstoff-enthaltenden Einsatzfraktion anzugeben, das die vorgenannten Nachteile vermeidet.

Zur Lösung dieser Aufgabe wird ein Verfahren zum Zerlegen einer Kohlenwasserstoff-reichen, Stickstoff-enthaltenden Einsatzfraktion gemäß Anspruch 1 vorgeschlagen, wobei
d) im mittleren Bereich der Rektifikation ein Kohlendioxid-armer Strom, der der Abkühlung des Stickstoff-angereicherten Teilstromes und/oder der Abkühlung der Stickstoff-angereicherten Fraktion dient, abgezogen wird,
e) die Rektifikation der Einsatzfraktion in einer eine Trennwand aufweisenden Trennkolonne erfolgt, wobei die Trennwand zumindest in demjenigen Bereich der Trennkolonne angeordnet ist, in dem der Trennkolonne die Einsatzfraktion zugeführt und der Kohlendioxid-arme Strom abgezogen werden, und die Einsatzfraktion und der Kohlendioxid-arme Strom auf entgegengesetzen Seiten der Trennwand zugeführt bzw. abgezogen werden, und
f) der Kohlendioxid-arme Strom vor dem Wärmetausch mit dem abzukühlenden Stickstoff-angereicherten Strom und/oder vor dem Wärmetausch mit der abzukühlenden Stickstoff-angereicherten Fraktion entspannt, nach erfolgtem Wärmetausch auf wenigstens den in der Rektifikation herrschenden Druck verdichtet, verlüssigt und unterkühlt und der Rektifikation oberhalb seiner Entnahmestelle auf der Seite der Trennwand, auf der er abgezogen wird, wieder zugeführt wird

Weitere vorteilhafte Ausgestaltungen des erfindungsgemäßen Verfahrens zum Zerlegen einer Kohlenwasserstoff-reichen, Stickstoff-enthaltenden Einsatzfraktion sind dadurch gekennzeichnet, dass
- die aus der Trennkolonne abgezogene Kohlenwasserstoff-reiche, Stickstoff-abgereicherte Fraktion entspannt, verdampft und überhitzt und vorzugsweise anschließend verdichtet wird,
- die Trennkolonne bei einem Druck zwischen 15 und 35 bar, vorzugsweise zwischen 25 und 30 bar betrieben wird und
- ein Teilstrom der in dem Doppelkolonnenprozess gewonnenen, flüssigen, Stickstoff-reichen Fraktion entspannt, verdampft und überhitzt und dem als Kältemittel dienenden Kohlendioxid-armen Strom zugemischt wird.

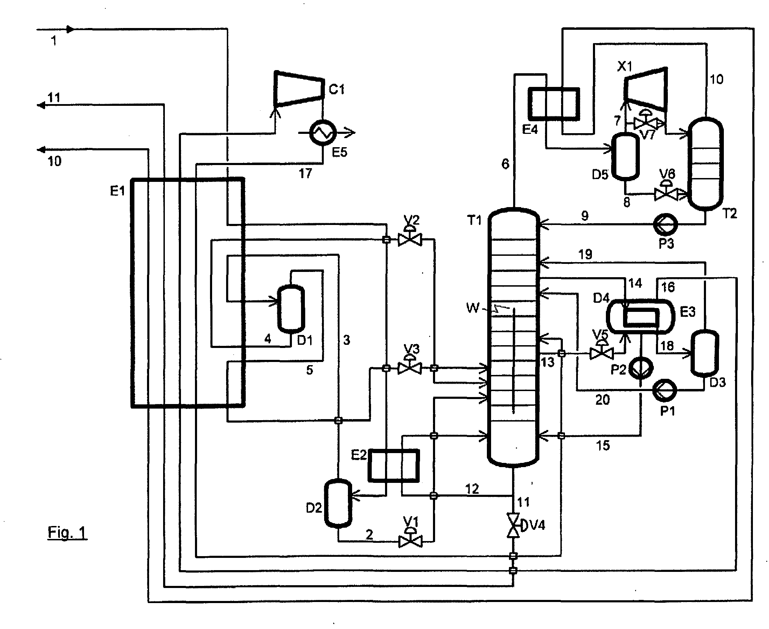

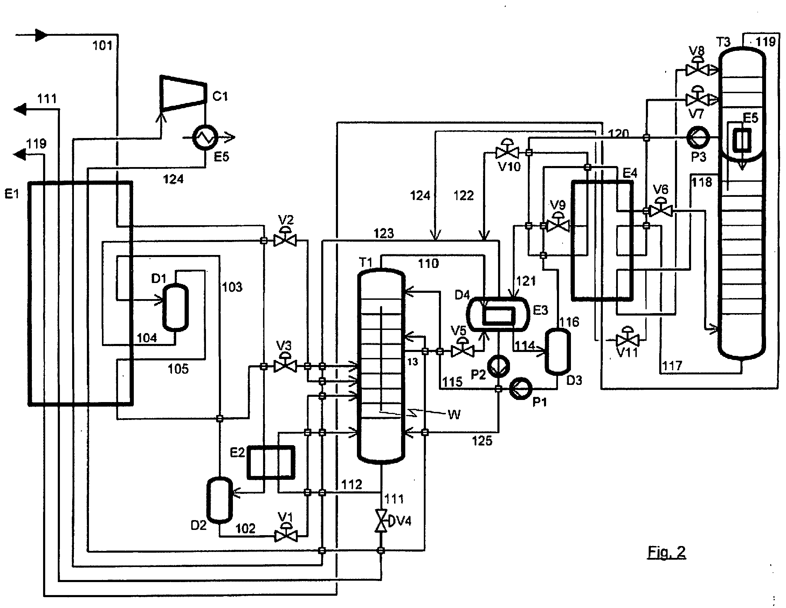

Das erfindungsgemäße Verfahren zum Verflüssigen einer Kohlenwasserstoff-reichen, Stickstoff-enthaltenden Einsatzfraktion sowie weitere vorteilhafte Ausgestaltungen desselben seien nachfolgend anhand der in den **Figuren 1** **und** **2** dargestellten Ausführungsbeispiele näher erläutert.

Wie in der **Figur 1** dargestellt, wird die Kohlenwasserstoff-reiche Einsatzfraktion, bei der es sich beispielsweise um einen Erdgasstrom handelt, über Leitung 1 durch die Wärmetauscher E1 und E2 geführt und gegen anzuwärmende Verfahrensströme, auf die im Folgenden noch näher eingegangen werden wird, teilweise verflüssigt. Der teilweise verflüssigte Erdgasstrom wird in einem dem Wärmetauscher E2 nachgeschalteten Abscheider D2 in eine Flüssig- 2 sowie eine Gasfraktion 3 aufgetrennt. Während die Flüssigfraktion 2 im Ventil V1 entspannt und anschließend der Rektifizier- bzw. Trennkolonne T1 zugeführt wird, wird die aus dem Abscheider D2 abgezogene Gasfraktion 3 im Wärmetauscher E1 partiell kondensiert und in einem dem Wärmetauscher E1 nachgeschalteten Abscheider D1 wiederum in eine Flüssig- 4 sowie Gasfraktion 5 aufgetrennt. Die Flüssigfraktion 4 wird im Wärmetauscher E1 angewärmt, im Ventil V2 entspannt und der Trennkolonne T1 ebenfalls in deren mittleren Bereich zugeführt. Die aus dem Abscheider D1 abgezogene Gasfraktion 5 wird im Wärmetauscher E1 abgekühlt und dabei partiell kondensiert, anschließend im Ventil V3 entspannt und oberhalb der Einspeispunkte der beiden vorgenannten Fraktionen ebenfalls der Trennkolonne T1 zugeführt.

Die vorgeschriebene Vortrennung des Erdgasstromes in den Abscheidern D1 und D2 verbessert die Trennleistung in der Trennkolonne T1 bzw. verringert deren Energiebedarf im Vergleich zu einer Trennaufgabe, bei der auf eine Vortrennung verzichtet wird. Die Trennkolonne T1 arbeitet typischerweise bei einem Druck zwischen 20 und 35 bar, vorzugsweise zwischen 25 und 30 bar.

Am Kopf der Trennkolonne T1 wird über Leitung 6 eine Stickstoff-angereicherte Fraktion abgezogen. Diese Fraktion wird im Wärmetauscher E4 partiell kondensiert und im nachgeschalteten Abscheider D5 in eine Flüssig- 8 sowie eine Gasfraktion 7 aufgetrennt. Letztere wird in der Entspannungsturbine X1 kälteleistend entspannt und auf den Kopf der zweiten Trennkolonne T2 gegeben. Durch die Trennkolonne T2 wird Stickstoff-angereicherte Fraktion 6 weiter von Methan gereinigt, so dass der Methan-Gehalt in der Stickstoff-angereicherten Fraktion 10 maximal 1 Vol.-% beträgt. Das Ventil V7 dient einer möglichen Reduzierung der Kälteleistung der Entspannungsturbine X1.

Die im Abscheider D5 gewonnene Flüssigfraktion 8 wird ebenfalls über Ventil V6 der Trennkolonne T2 zugeführt. Aus dem Sumpf der Trennkolonne T2 wird über Leitung 9 eine Methan-reiche Flüssigfraktion abgezogen und mittels der Pumpe P3 der Trennkolonne T1 als Rücklauf zugeführt. Diese Verfahrensführung unterstützt die in der Trennkolonne T1 ablaufende Feinreinigung. Die am Kopf der Trennkolonne T2 über Leitung 10 abgezogene Stickstoff-angereicherte Fraktion wird in den Wärmetauschern E4 und E1 angewärmt und aus der Anlage abgezogen.

Aus dem Sumpf der Trennkolonne T1 wird über Leitung 11 eine Kohlenwasserstoff-reiche, Stickstoff-abgereicherte Fraktion abgezogen; deren Stickstoff-Gehalt beträgt ca. 1 bis 5 Mol-%. Ein Teilstrom dieser Flüssigfraktion wird über Leitung 12 nach Verdampfung im Wärmetauscher E2, der als Aufkocher dient, in die Trennkolonne T1 zurückgeführt. Ethan, höhere Kohlenwasserstoffe sowie Kohlendioxid werden bis auf geringe Spuren mit der aus dem Sumpf der Trennkolonne T1 abgezogenen Flüssigfraktion 11 abgegeben. Die Flüssigfraktion 11 wird im Ventil V4 entspannt, im Wärmetauscher E1 verdampft und überhitzt und ggf. mittels eines in der Figur nicht dargestellten Verdichters nachverdichtet.

Erfindungsgemäß wird im mittleren Bereich der Trennkolonne T1 ein Kohlendioxid-armer Strom 13 abgezogen, im Ventil V5 auf einen Druck von 1,5 bis 4 bara, vorzugsweise 2 bis 3 bara, entspannt und dem Wärmetauscher E3, der als Haupt- bzw. Kopfkondensator dient, zugeführt. Dieser Kohlendioxid-arme Strom 13 dient erfindungsgemäß als Kühlmittel für den Kopfkondensator E3. Damit erübrigt sich die aus dem Stand der Technik bekannte Verwendung eines Teilstromes des Kohlendioxid-haltigen Sumpfproduktes als Kältemittel oder das Bereitstellen eines externen Kältemittels.

Um zu erreichen, dass der Kohlendioxid-Gehalt des Kohlendioxid-armen Stromes 13 weniger als 100 ppm, vorzugsweise weniger als 20 ppm beträgt, wird die Trennkolonne T1 erfindungsgemäß mit einer Trennwand W versehen. Hierbei ist die Trennwand W zumindest in demjenigen Bereich der Trennkolonne T1 vorzusehen, in dem der Trennkolonne die Einsatzfraktionen 2, 4 und 5 zugeführt und der Kohlendioxid-arme Strom 13 abgezogen werden. Die Trennwand W bewirkt somit, dass der bzw. die Kohlendioxid-haltigen Einsatzfraktionen 2, 4 und 5 nicht mit dem Kohlendioxid-armen Strom 13 in Kontakt kommen. Im unteren und oberen Abschnitt der Trennkolonne T1 erübrigt sich eine derartige Trennwand.

Durch Einstellen geeigneter Rücklaufverhältnisse links und rechts der Trennwand W können sowohl die erhöhten Kohlendioxid-Mengen der Kohlendioxid-haltigen Zuspeisungen 2, 4 und 5 in den Sumpf der Trennkolonne T1 gedrückt als auch die gewünschte Kohlendioxid-Reinheit des Kohlendioxid-armen Stromes 13 eingestellt werden.

Der als Kältemittel verwendete Kohlendioxid-arme Strom 13 wird im Wärmetauscher E3 bei niedrigem Druck zumindest teilweise verdampft, über Leitung 16 dem Wärmetauscher E1 zugeführt und in diesem angewärmt, anschließend, vorzugsweise mehrstufig, auf wenigstens den in der Trennkolonne T1 herrschenden Druck im Verdichter C1 verdichtet, im nachgeschalteten Wärmetauscher E5 gekühlt, im Wärmetauscher E1 verflüssigt und unterkühlt und schließlich der Trennkolonne T1 im Bereich rechts der Trennwand W oberhalb der Entnahmestelle 13 wieder zugeführt.

Der als Kältemittel verwendete Kohlendioxid-arme Strom 13 kühlt im Wärmetauscher E3 einen über Leitung 14 aus dem oberen Bereich der Trennkolonne T1 abgezogenen Stickstoff-angereicherten Strom, der nach Durchgang durch den Wärmetauscher E3 über Leitung 18 einem Abscheider D3 zugeführt und in diesem in eine Flüssig- 20 und eine Gasfraktion 19 aufgetrennt wird. Letztere wird der Trennkolonne T1 oberhalb der Entnahmestelle 14 zugeführt, ebenso die Flüssigfraktion 20, die mittels der Pumpe P1 der Trennkolonne T1 als Rücklauf aufgegeben wird.

Der Kopfkondensator E3 wird vorzugsweise, wie in der Figur dargestellt, als Badverdampfer mit einem umschließenden Behälter D4 ausgeführt. Diese Ausgestaltung hat den Vorteil, dass das flüssige Kältemittel nicht vollständig verdampft werden muss und somit eine unerwünschte Anreicherung von Kohlendioxid vermieden werden kann. In diesem Falle kann dem Behälter D4 eine Abschlämmung entnommen und mittels der Pumpe P2 über Leitung 15 in den Sumpf der Trennkolonne T1 geführt werden, wodurch die Kohlendioxid-Anreicherung im Behälter D4 limitiert werden kann.

Durch die Bereitstellung eines Seitenstromes 13 mit niedriger Kohlendioxid-Konzentration kann die vergleichsweise hohe Kohlendioxid-Toleranz eines eingangs beschriebenen Verfahrens mit geschlossenem Kältekreislauf beibehalten werden, ohne die Nachteile der aufwändigen Kältemittelreinigung und -lagerung in Kauf nehmen zu müssen.

Bei der in der **Figur 2** dargestellten Ausführungsform des erfindungsgemäßen Verfahrens wird die Kohlenwasserstoff-reiche Einsatzfraktion über Leitung 101 durch die Wärmetauscher E1 und E2 geführt und gegen anzuwärmende Verfahrensströme, auf die im Folgenden noch näher eingegangen werden wird, teilweise verflüssigt. Der teilweise verflüssigte Erdgasstrom wird in einem dem Wärmetauscher E2 nachgeschalteten Abscheider D2 in eine Flüssig- 102 sowie eine Gasfraktion 103 aufgetrennt. Während die Flüssigfraktion 102 im Ventil V1 entspannt und anschließend der Rektifizier- bzw. Trennkolonne T1 zugeführt wird, wird die aus dem Abscheider D2 abgezogene Gasfraktion 103 im Wärmetauscher E1 partiell kondensiert und in einem dem Wärmetauscher E1 nachgeschalteten Abscheider D1 wiederum in eine Flüssig-104 sowie Gasfraktion 105 aufgetrennt. Die Flüssigfraktion 104 wird im Wärmetauscher E1 angewärmt, im Ventil V2 entspannt und der Trennkolonne T1 ebenfalls in deren mittleren Bereich zugeführt. Die aus dem Abscheider D1 abgezogene Gasfraktion 105 wird im Wärmetauscher E1 abgekühlt und dabei partiell kondensiert, anschließend im Ventil V3 entspannt und oberhalb der Einspeispunkte der beiden vorgenannten Fraktionen ebenfalls der Trennkolonne T1 zugeführt.

Am Kopf der Trennkolonne T1 wird über Leitung 110 eine Stickstoff-angereicherte Fraktion abgezogen. Die Stickstoff-angereicherte Fraktion 110 wird im Wärmetauscher E3 abgekühlt und partiell kondensiert und im nachgeschalteten Abscheider D3 in eine Gas- 116 und eine Flüssigfraktion 115 aufgetrennt; letztere wird der Rektifikation T1 als Rücklauf aufgegeben. Die Gasfraktion 116, die einen Stickstoff-Gehalt von wenigstens 30 Vol.% aufweist, wird im Wärmetauscher E4 abgekühlt und mindestens partiell kondensiert, im Ventil V6 entspannt und der Hochdrucksäule einer Doppelkolonne T3, wie sie aus dem Stand der Technik bekannt ist, zugeführt. Die der Doppelkolonne T3 zugeführte Fraktion 116 enthält höchstens 20, vorzugsweise weniger als 5 ppm Kohlendioxid, um Feststoffprobleme in der Doppelkolonne T3 zu vermeiden.

Aus dem Sumpf der Hochdrucksäule der Doppelkolonne T3 wird eine Methan-reiche Flüssigfraktion 117 abgezogen, im Wärmetauscher E3 unterkühlt und über Ventil V7 in die Niederdrucksäule der Doppelkolonne T3 entspannt. Am Kopf der Hochdrucksäule der Doppelkolonne T3 wird eine flüssige, Stickstoff-reiche Gasfraktion 118 abgezogen, im Wärmetauscher E3 unterkühlt und über Ventil V8 der Niederdrucksäule der Doppelkolonne T3 aufgegeben. Die Hoch- und die Niederdrucksäule der Doppelkolonne T3 sind über einen Wärmetauscher E5 gekoppelt.

Ein Teilstrom 124 der vorgenannten, in dem Doppelkolonnenprozess T3 gewonnenen flüssigen, Stickstoff-reichen Fraktion 118 wird im Ventil V11 entspannt, im Wärmetauscher E4 verdampft und überhitzt und dem als Kältemittel dienenden Kohlendioxid-armen Strom 123 zugemischt wird. Diese Verfahrensführung dient der Erhöhung der Stickstoff-Menge der am Kopf des Abscheiders D3 abgezogenen Gasfraktion 116 und vergrößert den Bereich variabler Stickstoff-Konzentration in der Einsatzfraktion 101, der ohne Teillastproblem in der Doppelkolonne T3 verarbeitet werden kann.

Am Kopf der Niederdrucksäule der Doppelkolonne T3 wird eine Stickstoff-angereicherte Gasfraktion 119 abgezogen, in den Wärmetauschern E4 und E1 angewärmt und aus der Anlage abgezogen.

Aus dem Sumpf der Niederdrucksäule der Doppelkolonne T3 wird mittels der Pumpe P3 eine Methan-reiche Flüssigfraktion 120 abgezogen, im Wärmetauscher E4 verdampft und über Ventil V10 der Kohlendioxid-armen Fraktion 123, auf die im Folgenden noch eingegangen wird, zugeführt. Ein Teilstrom 121 der Flüssigfraktion 120 wird über Ventil V9 in den Wärmetauscher E3 entspannt und unterstützt damit die Kühlung im Wärmetauscher E3.

Aus dem Sumpf der Trennkolonne T1 wird über Leitung 111 eine Kohlenwasserstoff-reiche, Stickstoff-abgereicherte Fraktion abgezogen; deren Stickstoff-Gehalt beträgt bis zu 5 Mol-%. Ein Teilstrom dieser Flüssigfraktion wird über Leitung 112 nach Verdampfung im Wärmetauscher E2, der als Aufkocher dient, in die Trennkolonne T1 zurückgeführt. Ethan, höhere Kohlenwasserstoffe sowie Kohlendioxid werden bis auf geringe Spuren mit der aus dem Sumpf der Trennkolonne T1 abgezogenen Flüssigfraktion 111 abgegeben. Die Flüssigfraktion 111 wird im Ventil V4 entspannt, im Wärmetauscher E1 verdampft und überhitzt und ggf. mittels eines in der Figur nicht dargestellten Verdichters nachverdichtet.

Erfindungsgemäß wird im mittleren Bereich der Trennkolonne T1 ein Kohlendioxid-armer Strom 113 abgezogen, im Ventil V5 auf einen Druck von 5 bis 15 bara, vorzugsweise 7 bis 10 bara, entspannt und dem Wärmetauscher E3, der als Haupt- bzw. Kopfkondensator dient, zugeführt. Dieser Kohlendioxid-arme Strom 113 dient erfindungsgemäß als Kühlmittel für den Kopfkondensator E3. Damit erübrigt sich die aus dem Stand der Technik bekannte Verwendung eines Teilstromes des Kohlendioxid-haltigen Sumpfproduktes als Kältemittel oder das Bereitstellen eines externen Kältemittels.

Der als Kältemittel verwendete Kohlendioxid-arme Strom 113 wird im Wärmetauscher E3 zumindest teilweise verdampft, über Leitung 123 dem Wärmetauscher E1 zugeführt und in diesem angewärmt, anschließend, vorzugsweise mehrstufig, auf wenigstens den in der Trennkolonne T1 herrschenden Druck im Verdichter C1 verdichtet, im nachgeschalteten Wärmetauscher E5 gekühlt, im Wärmetauscher E1 verflüssigt und unterkühlt und schließlich der Trennkolonne T1 im Bereich rechts der Trennwand W oberhalb der Entnahmestelle 113 wieder zugeführt.

Der Kopfkondensator E3 wird vorzugsweise als Badverdampfer mit einem umschließenden Behälter D4 ausgeführt. Diese Ausgestaltung hat den Vorteil, dass das flüssige Kältemittel nicht vollständig verdampft werden muss und somit eine unerwünschte Anreicherung von Kohlendioxid vermieden werden kann. In diesem Falle kann dem Behälter D4 eine Abschlämmung entnommen und mittels der Pumpe P2 über Leitung 115 in den Sumpf der Trennkolonne T1 geführt werden, wodurch die Kohlendioxid-Anreicherung im Behälter D4 limitiert werden kann.

Gegenüber einem eingangs beschriebenen Verfahren mit offenem Kältekreislauf kann im Falle des erfindungsgemäßen Verfahrens auf eine Abtrennung von Kohlendioxid aus der Einsatzfraktion bzw. dem Erdgasstrom, wie sie bisher bspw. in Form einer Aminwäsche realisiert wird und bei einer Kohlendioxid-Konzentration von ≥ 100 ppm in der Einsatzfraktion erforderlich wäre, verzichtet werden.

Es werden somit gezielt die wirtschaftlich wünschenswerten Eigenschaften der beiden eingangs beschriebenen Referenzverfahren beibehalten, ohne deren Nachteile zu übernehmen.

## Patentansprüche

1. Verfahren zum Zerlegen einer Kohlenwasserstoff-reichen, Stickstoff-enthaltenden Einsatzfraktion (1, 101), vorzugsweise von Erdgas,
a) wobei die Einsatzfraktion (1, 101) zumindest teilweise verflüssigt (E1, E2) und rektifikatorisch (T1) in eine Stickstoff-angereicherte Fraktion (7, 14, 110) und eine Kohlenwasserstoff-reiche, Stickstoff-abgereicherte Fraktion (11, 111) aufgetrennt wird und
b) wobei im oberen Bereich der Rektifikation (T1) ein Stickstoff-angereicherter Strom (14) abgezogen, abgekühlt (E3) und zumindest teilweise der Rektifikation (T1) als Rücklauf aufgegeben wird (20) und/oder
c) die Stickstoff-angereicherte Fraktion (110) abgekühlt und partiell kondensiert wird (E3), zumindest teilweise der Rektifikation (T1) als Rücklauf (115) aufgegeben wird und der Reststrom (116) der Stickstoff-angereicherten Fraktion (110) einem Doppelkolonnenprozess (T3) unterworfen wird,
wobei
d) im mittleren Bereich der Rektifikation (T1) ein Kohlendioxid-armer Strom (13, 113), der der Abkühlung (E3) des Stickstoff-angereicherten Teilstromes (14) und/oder der Abkühlung (E3) der Stickstoff-angereicherten Fraktion (110) dient, abgezogen wird,
e) die Rektifikation (T1) der Einsatzfraktion in einer eine Trennwand (W) aufweisenden Trennkolonne (T1) erfolgt, wobei die Trennwand (W) zumindest in demjenigen Bereich der Trennkolonne (T1) angeordnet ist, in dem der Trennkolonne (T1) die Einsatzfraktion (2, 4, 5, 102, 104, 105) zugeführt und der Kohlendioxid-arme Strom (13, 113) abgezogen werden, und die Einsatzfraktion und der Kohlendioxid-arme Strom auf entgegengesetzen Seiten der Trennwand zugeführt bzw. abgezogen werden, und
f) der Kohlendioxid-arme Strom (13, 113) vor dem Wärmetausch (E3) mit dem abzukühlenden Stickstoff-angereicherten Strom (14) und/oder vordem Wärmetausch (E3) mit der abzukühlenden Stickstoff-angereicherten Fraktion (110) entspannt (V5) wird,
im Wärmetauscher (E3) zumindest teilweise verdampft wird,
nach erfolgtem Wärmetausch (E3) dem Wärmetauscher (E1) zugeführt wird und in diesem erwärmt, anschliessend auf wenigstens den in der Rektifikation (T1) herrschenden Druck verdichtet (C1),
im nachgeschalteteten Wärmetauscher (E5) gekühlt wird,
im Wärmetauscher (E1) verflüssigt und unterkühlt wird und
der Rektifikation (T1) oberhalb seiner Entnahmestelle auf der Seite der Trennwand (T), auf der er abgezogen wird, wieder zugeführt wird (17, 124).

2. Verfahren nach Anspruch 1, **dadurch gekennzeichnet, dass** die aus der Trennkolonne (T1) abgezogene Kohlenwasserstoff-reiche, Stickstoff-abgereicherte Fraktion (11, 111) entspannt (V4), verdampft und überhitzt (E1) und vorzugsweise anschließend verdichtet wird.

3. Verfahren nach Anspruch 1 oder 2, **dadurch gekennzeichnet, dass** die Trennkolonne (T1) bei einem Druck zwischen 15 und 35 bar, vorzugsweise zwischen 25 und 30 bar betrieben wird.

4. Verfahren nach einem der Ansprüche 1 bis 3, **dadurch gekennzeichnet, dass** ein Teilstrom (124) der in dem Doppelkolonnenprozess (T3) gewonnenen, flüssigen, Stickstoff-reichen Fraktion (118) entspannt (V11), verdampft und überhitzt (E4) und dem als Kältemittel dienenden Kohlendioxid-armen Strom (123) zugemischt wird.

## Claims

1. Method for the separation of a hydrocarbon-rich, nitrogen-containing feed fraction (1, 101), preferably natural gas,
a) wherein the feed fraction (1, 101) is at least in part liquefied (E1, E2) and divided by rectification (T1) into a nitrogen-enriched fraction (7, 14, 110) and a hydrocarbon-rich, nitrogen-depleted fraction (11, 111) and
b) wherein, in the upper region of the rectification (T1), a nitrogen-enriched stream (14) is taken off, cooled (E3) and applied (20) at least in part to the rectification (T1) as reflux and/or
c) the nitrogen-enriched fraction (110) is cooled and partially condensed (E3), applied at least in part to the rectification (T1) as reflux (115) and the remaining stream (116) of the nitrogen-enriched fraction (110) is subjected to a double-column process (T3),
wherein
d) in the middle region of the rectification (T1), a carbon-dioxide-poor stream (13, 113) which serves for cooling (E3) the nitrogen-enriched substream (14) and/or cooling (E3) the nitrogen-enriched fraction (110) is taken off,
e) the feed fraction is rectified (T1) in a separation column (T1) having a dividing wall (W), wherein the dividing wall (W) is arranged at least in the region of the separation column (T1) in which the feed fraction (2, 4, 5, 102, 104, 105) is fed to the separation column (T1) and the carbon-dioxide-poor stream (13, 113) is taken off, and the feed fraction and the carbon-dioxide-poor stream are fed in and taken off on opposite sides of the dividing wall, and
f) the carbon-dioxide-poor stream (13, 113) is expanded (V5) upstream of the heat exchange (E3) with the nitrogen-enriched stream (14) that is to be cooled and/or upstream of the heat exchange (E3) with the nitrogen-enriched fraction (110) that is to be cooled,
is at least partly evaporated in the heat exchanger (E3),
on completion of heat exchange (E3) is fed to the heat exchanger (E1) and heated therein, then compressed (C1) to at least the pressure prevailing in the rectification (T1),
is cooled in the downstream heat exchanger (E5),
is liquefied and subcooled in the heat exchanger (E1) and
is fed back (17, 124) to the rectification (T1) above the withdrawal point thereof on the side of the dividing wall (T) on which it is taken off.

2. Method according to Claim 1, **characterized in that** the hydrocarbon-rich, nitrogen-depleted fraction (11, 111) that is taken off from the separation column (T1) is expanded (V4), vaporized and superheated (E1), and is preferably then compressed.

3. Method according to Claim 1 or 2, **characterized in that** the separation column (T1) is operated at a pressure between 15 and 35 bar, preferably between 25 and 30 bar.

4. Method according to any one of Claims 1 to 3, **characterized in that** a substream (124) of the liquid nitrogen-rich fraction (118) obtained in the double-column process (T3) is expanded (V11), vaporized and superheated (E4) and added to the carbon-dioxide-poor stream (123) that is acting as refrigerant.

## Revendications

1. Procédé de décomposition d'une fraction d'entrée (1, 101) riche en hydrocarbures, contenant de l'azote, de préférence de gaz naturel,
a) dans lequel la fraction d'entrée (1, 101) est au moins en partie liquéfiée (E1, E2) et séparée par rectification (T1) en une fraction enrichie en azote (7, 14, 110) et une fraction riche en hydrocarbures, appauvrie en azote (11, 111), et
b) dans lequel un courant enrichi en azote (14) est soutiré dans la zone supérieure de la rectification (T1), refroidi (E3) et au moins en partie introduit en tant que reflux (20) dans la rectification (T1) et/ou
c) la fraction enrichie en azote (110) est refroidie et partiellement condensée (E3), au moins en partie introduite en tant que reflux (115) dans la rectification (T1) et le courant résiduel (116) de la fraction enrichie en azote (110) est soumis à un procédé à colonne double (T3),
dans lequel
d) un courant pauvre en dioxyde de carbone (13, 113), qui sert au refroidissement (E3) du courant partiel enrichi en azote (14) et/ou au refroidissement (E3) de la fraction enrichie en azote (110), est soutiré dans la zone centrale de la rectification (T1),
e) la rectification (T1) de la fraction d'entrée a lieu dans une colonne de séparation (T1) comprenant une paroi de séparation (W), la paroi de séparation (W) étant agencée au moins dans la zone de la colonne de séparation (T1) dans laquelle la fraction d'entrée (2, 4, 5, 102, 104, 105) est introduite dans la colonne de séparation (T1) et le courant pauvre en dioxyde de carbone (13, 113) est soutiré de la colonne de séparation (T1), et la fraction d'entrée étant introduite et le courant pauvre en dioxyde de carbone étant soutiré sur des côtés opposés de la paroi de séparation, et
f) le courant pauvre en dioxyde de carbone (13, 113) est détendu (V5) avant l'échange de chaleur (E3) avec le courant enrichi en azote à refroidir (14) et/ou avant l'échange de chaleur (E3) avec la fraction enrichie en azote à refroidir (110),
au moins partiellement évaporé dans l'échangeur de chaleur (E3),
introduit dans l'échangeur de chaleur (E1) après l'échange de chaleur (E3) et chauffé dans celui-ci, puis comprimé (C1) au moins à la pression régnant dans la rectification (T1),
refroidi dans l'échangeur de chaleur (E5) en aval, liquéfié et sous-refroidi dans l'échangeur de chaleur (E1), et
réintroduit (17, 124) dans la rectification (T1) au-dessus de son emplacement de soutirage du côté de la paroi de séparation (T) duquel il est soutiré.

2. Procédé selon la revendication 1, **caractérisé en ce que** la fraction riche en hydrocarbures, appauvrie en azote (11, 111) soutirée de la colonne de séparation (T1) est détendue (V4), évaporée et surchauffée (E1), puis de préférence comprimée.

3. Procédé selon la revendication 1 ou 2, **caractérisé en ce que** la colonne de séparation (T1) est exploitée à une pression comprise entre 15 et 35 bar, de préférence entre 25 et 30 bar.

4. Procédé selon l'une quelconque des revendications 1 à 3, **caractérisé en ce qu'**un courant partiel (124) de la fraction liquide riche en azote (118) obtenue dans le procédé à colonne double (T3) est détendu (V11), évaporé et surchauffé (E4), et mélangé avec le courant pauvre en dioxyde de carbone (123) servant d'agent réfrigérant.
